# EUROPEAN PATENT SPECIFICATION

(11) **EP 0 379 386 B1**
(45) Date of publication and mention of the grant of the patent: **14.07.1993**
(21) Application number: 90300588.2
(22) Date of filing: 19.01.1990
(51) Int. Cl.: B60T 8/18

(54) **Vehicle load-dependent brake force control apparatus**
Lastabhängiger Bremskraftregler für Kraftfahrzeuge
Dispositif de contrôle de freinage dépendant de la charge pour véhicules

(30) Priority: 20.01.1989 GB 8901252
(43) Date of publication of application: 25.07.1990
(73) Proprietor: BENDIX LIMITED, Kingswood, Bristol BS15 2NL (GB)
(72) Inventor: Scudamore, Gerald, Bitton, Bristol BS15 6JZ (GB); Piancastelli, Andrew, Hayle, Cornwall, TR27 4AH (GB)
(74) Representative: Turner, Alan Reginald

(56) References cited:
- DE-A- 2 443 762
- DE-A- 2 855 295

## Description

This invention relates to vehicle load-dependent brake force control apparatus and relates more especially but not exclusively to fluid pressure proportioning apparatus.

In vehicle compressed air braking systems it has been proposed to employ a variable air pressure proportioning valve device between a drivers' brake control valve and brake actuators themselves, the proportioning valve device being adjustable by mechanical linkage dependent on vehicle axle deflection or by means dependent upon pressure signals derived from an air suspension.

One proposal for a pressure proportioning valve assembly controllable by pressure signals from an air suspension is disclosed in the Specification of United Kingdom Patent No. 2058976, which is particularly concerned with the means for enabling adjustment of the assembly to provide a desired relationship between controlling pressure signals and the resultant output pressure characteristics.

The object is to provide apparatus which is more compact and easily adjusted than has hitherto been available.

According to the present invention there is provided a vehicle load dependent brake force control apparatus including variable fluid pressure proportioning means having a proportion setting member the position of which in a housing is settable by a control member via cam surface of a cam member carried by carrier linearly movable by the action of a load dependent control pressure signal at a port acting against the force of a spring and characterised in that the lift angle of said cam surface is separately adjustable relative to said carrier means to select a desired operating characteristic.

In order that the invention may be more clearly understood and readily carried into effect the same will be more fully described with reference to the accompanying drawing of which
Fig. 1 comprises a sectional view of part of an apparatus in accordance with the invention.
Fig. 2 comprises a transverse section and
Fig. 3 illustrate an alternative operative position of an internal carriage of Fig. 1.

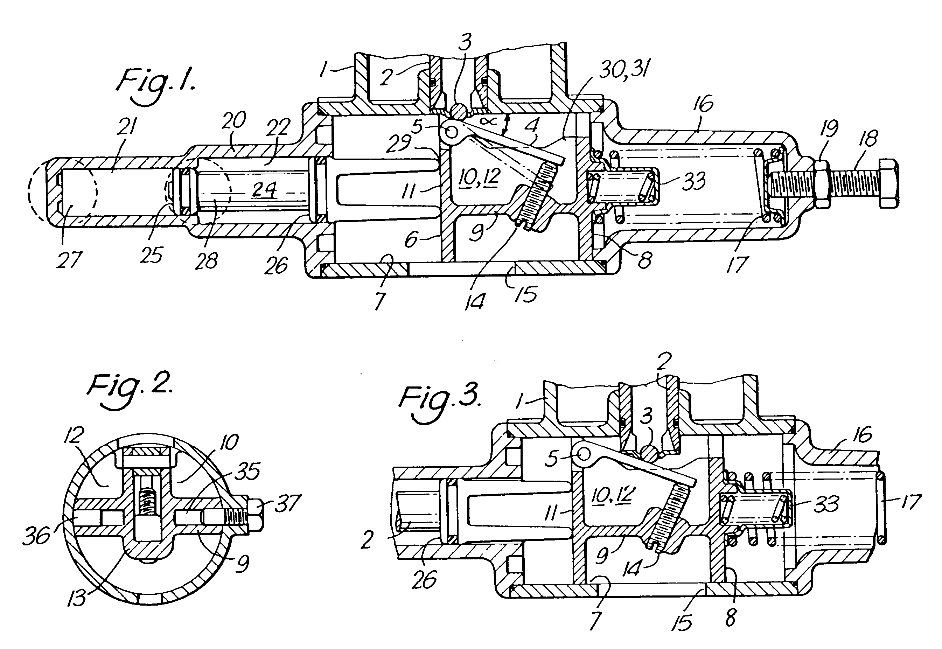

Referring to Fig. 1, the body section reference 1 indicates the lower part of the housing of a variable fluid pressure proportioning valve, the precise construction of which is of little consequence for the understanding of the present invention. Suffice it to appreciate that the proportioning valve operates in known manner to deliver an output pressure which is proportioned in relation to an input control pressure in accordance with the axial positioning of a proportion setting member comprising a plunger indicated at 2. A typical such fluid pressure proportioning valve device is described in more detail in the Specification of United Kingdom Patent Application No. 8828132 reference to which may be had if required. For the present purpose however, the proportion setting member is provided, at its lower end as shown in Fig. 1 with a roller 3 via which it bears against the surface of a lever cam 4 pivotally supported at one end by pivot 5 (having and axis transverse to the direction of movement of the plunger 2) of a carriage 6 which is slidingly moveable in a cylindrical bore 7 which extends in a direction at 90° to the axis of plunger 2. The carriage 6 has generally disc-shaped end parts 8 and 11 joined by integral joining parts 9 and 10, 12. Part 9 has a small screw-threaded boss 13 carrying an adjustable screw stop 14 accessible from externally of the housing through an aperture 15. The free end of the lever cam 4 thus rests against the inner end of the screw stop, between the parts 10, 12 and being carried by the carriage it presents to the roller 3 and plunger 2 a cam surface angle α which is adjustable by the stop screw 14.

Sliding and correctly orientated movement of the carriage 6 in bore 7 is allowed by a screw 37 locating in an axial channel 35, as seen clearly in the sectional view of Fig. 2. The right hand end of the lower housing with bore 7 is closed by a cover 16 between the right hand end of which and the carriage 6 there is a captive spring 17 the force of which is adjustable by an adjuster screw 18 with locking nut 19. The inner end of spring 17 acts on the end 8 of the carriage 6 via the flange of a top-hat shaped cage 33 by which a relatively lighter and approximately constant rate spring 32 is held captive and the combined extended length of springs 32 and 17 is greater than the internal lengths of the bore 7 and the cover 16 as not occupied by carriage 6. Acting in opposition to the spring 17, the left hand end of the lower housing bore 7 is closed by a further cover 20 defining two co-extending bores 21 and 22. These bores accommodate a control member comprising a dual piston assembly 24 of which respective equal piston areas 25 and 26 are subject to the fluid pressures at control pressure signal ports 27 and 28. The inner end 29 of the dual piston assembly 24 rests against the end part 11 of carriage 6. The position shown in Fig. 1 is the position corresponding to maximum compression of the spring 17 and maximum delivered pressure signal form the proportioning valve

In operation of the apparatus the effectively equal piston areas 25 and 26 are subject to separate control pressures at ports 27 and 28 corresponding to air suspension pressures on respective sides of the vehicles. Therefore the force exerted thereby on the carriage 6 is proportional to the mean load on the respective axle assembly of the vehicle. If the vehicle load is low the position of the carriage 6 may typically be as indicated in Fig. 3, from which it is readily seen that the control plunger 2 is at a lower axial position than the full load position of Fig. 1. The normal operating range of positions of the carriage 6 will depend upon the range of the total of the pressures at ports 27 and 28 and the setting of the compression of the spring 17. Thus in order to initially set up the apparatus full-load pressure is first applied to both ports 27 and 28 and the adjusting member 18 is set to give the full 1:1 delivered pressure output of the proportioning valve. The pressures at 27 and 28 are reduced to tare weight pressure and the adjusting member 14 is adjusted to set the angle (α) of the cam surface of lever 4 to produce the desired control range of delivered pressures.

In order to ensure that the delivered pressure reverts to a given value, typically corresponding to a control ratio of 2:1, in the event of the control pressure signals at 27 and 28 failing, movement of the carriage 6 to an extreme leftward position results in the roller 3 riding up on the surfaces 30, 31 of joining parts 10, 12. The additional spring 32 in cage 33 ensures that this occurs despite the possibility of the full stroke (free) length of spring 17 alone not being sufficient to move part 11 of the carriage 6 across into engagement with the cover 20.

In the embodiment of the invention shown in the drawings and more particularly as seen in Fig. 2, the carriage 6 is provided with axial channels 35 and 36 either of which can serve to receive the locating screw 37. The end covers 16 and 20 are also interchangeable so that the apparatus can readily be assembled oppositely handed to the manner shown.

## Claims

1. Vehicle load dependent brake force control apparatus including variable fluid pressure proportioning means having a proportion setting member (2) the position of which in a housing (1) is settable by a control member (24) via a cam surface of a cam member (4) carried by carrier (6) linearly movable by the action of a load dependent control pressure signal at a port (27,28) acting against the force of a spring (17) and characterised in that the lift angle (α) of said cam surface (4) is separately adjustable relative to said carrier means (6) to select a desired operating characteristic.

2. Apparatus as claimed in claim 1, characterised in that said cam member is a lever (4) pivotable at a point (5) on said carrier and thereby movable about an axis transverse to the direction of movement of said setting member (2).

3. Apparatus as claimed in claim 2, characterised in that said lever (4) is supported at a point spaced from said pivot axis by a screw adjuster (14) carried by and adjustable relative to said carrier (6).

4. Apparatus as claimed in claim 1, 2 or 3, characterised in that said carried (6) has a further cam surface (30,31) which cooperates with said setting member (2) to produce a predeterminable setting thereof in the absence of said pressure signal.

5. Apparatus as claimed in claim 1, 2, 3 or 4, characterised in that said apparatus is responsive to fluid pressure in a sense to move said carrier (6) in one direction and is responsive to the force of a spring in a sense to move said carrier in an opposite direction the force of said spring being separately adjustable by a screw adjuster which together with the separate adjustment of the said lift angle (α) determines the operating characteristic.

## Patentansprüche

1. Von der Fahrzeuglast abhängige Bremskraftsteuervorrichtung, die eine variable Druckbemessungseinheit umfaßt, die einen Bemessungseinstellteil (2) hat, dessen Position in einem Gehäuse (1) durch einen Steuerteil (24) über eine Nockenfläche eines Nockenteils (4) einstellbar ist, der durch einen Träger (6) getragen ist, welcher unter der Wirkung eines lastabhängigen Steuerdrucksignals an einer Öffnung (27, 28) linear bewegbar ist, der gegen die Kraft einer Feder (17) wirkt,
dadurch gekennzeichnet,
daß der Hebelwinkel (α) der Nockenfläche (4) getrennt einstellbar ist relativ zu der Trägereinrichtung (6), um eine gewünschte Betriebscharakteristik auszuwählen.

2. Vorrichtung nach Anspruch 1,
dadurch gekennzeichnet,
daß der Nockenteil ein Hebel (4) ist, der an einer Stelle (5) an dem Träger angelenkt und daher um eine Achse quer zur Richtung der Bewegung des Einstellteils (2) bewegbar ist.

3. Vorrichtung nach Anspruch 2,
dadurch gekennzeichnet,
daß der Hebel (4) an einer Stelle im Abstand von der Schwenkachse durch eine Schraubeneinstelleinrichtung (14) abgestützt ist, die von dem Träger (6) getragen und relativ zu diesem einstellbar ist.

4. Vorrichtung nach Anspruch 1, 2 oder 3,
dadurch gekennzeichnet,
daß der Träger (6) eine weitere Nockenfläche (30, 31) hat, die mit dem Einstellteil (2) zusammenarbeitet, um eine vorbestimmbare Einstellung von diesem bei Nichtvorhandensein des genannten Drucksignals hervorzurufen.

5. Vorrichtung nach Anspruch 1, 2, 3 oder 4,
dadurch gekennzeichnet,
daß die Vorrichtung auf Fluiddruck anspricht in einem Sinn, den Träger (6) in einer Richtung zu bewegen, und auf die Kraft einer Feder anspricht in einem Sinn, den Träger in einer entgegengesetzten Richtung zu bewegen, wobei die Kraft der Feder durch ein Schraubeneinstellorgan getrennt einstellbar ist, welches zusammen mit der getrennten Einstellung des Hebewinkels (α) die Betriebscharakteristik bestimmt.

## Revendications

1. Appareil de réglage de la force de freinage d'un véhicule en fonction de sa charge, incluant un moyen permettant de modifier le rapport des pressions de fluide, ce moyen comprenant un organe de fixation (2) du rapport des pressions dont la position dans un boîtier (1) peut être réglée par un organe de réglage (24) au moyen d'une surface de came d'un organe (4) de came porté par un support (6) qui peut subir un déplacement linéaire sous l'effet d'un signal de pression de réglage en fonction de la charge, apparaissant à un orifice (27, 28) et agissant en opposition à la force d'un ressort (17),
caractérisé en ce que l'angle d'inclinaison (α) de ladite surface de came peut être ajusté séparément par rapport audit support (6) afin de choisir une caractéristique de fonctionnement souhaitée.

2. Appareil selon la revendication 1, caractérisé en ce que ledit organe de came est un levier (4) pivotant autour d'un point (5) sur ledit support et mobile de cette manière autour d'un axe transversal à la direction de déplacement dudit élément de fixation (2).

3. Appareil selon la revendication 2, caractérisé en ce que ledit levier (4) est supporté à un point espacé dudit axe de pivot par un dispositif d'ajustement à vis (14) porté par ledit support (6) et susceptible d'être réglé par rapport à celui-ci.

4. Appareil selon la revendication 1, 2 ou 3, caractérisé en ce que ledit support (6) est pourvu d'une autre surface de came (30, 31) qui coopère avec ledit élément de fixation (2) pour établir, en l'absence dudit signal de pression, une position fixe de ce dernier qui peut être prédéterminée.

5. Appareil selon la revendication 1, 2, 3 ou 4, caractérisé en ce que ledit appareil est sensible à une pression de fluide qui agit pour déplacer ledit support (6) dans un sens, et sensible à la force d'un ressort qui agit pour déplacer ledit support dans un sens opposé, la force dudit ressort pouvant être ajustée séparément par un dispositif d'ajustement à vis qui détermine, avec le réglage séparé dudit angle d'inclinaison (α), la caractéristique de fonctionnement.
